# EUROPÄISCHE PATENTANMELDUNG

(11) **EP 2 851 855 A1**
(43) Veröffentlichungstag der Anmeldung: **25.03.2015**
(21) Anmeldenummer: 14183720.3
(22) Anmeldetag: 05.09.2014
(51) Int. Cl.: G06Q 20/32, G07F 11/00

(54) **Verfahren zum Bezahlen an einem Verkaufsautomaten mit einem mobilen Endgerät**

(30) Priorität: 19.09.2013 DE 102013110369
(71) Anmelder: Deutsche Post AG, 53113 Bonn (DE); Materna GmbH Information & Communications, 44141 Dortmund (DE)
(72) Erfinder: Beckmann, Clemens, 50677 Köln (DE); Engelhard, Steven, 53881 Euskirchen (DE); Hagemann, Dirk, 53115 Bonn (DE); Lampe, Jochen, 52393 Hürtgenwald (DE); Langer, Frank, 53844 Troisdorf (DE); Götting, Marcus, 28205 Bremen (DE); Koch, Marc, 28199 Bremen (DE); Neste, Lieselotte, 44575 Castrop-Rauxel (DE)
(74) Vertreter: Michalski Hüttermann & Partner Patentanwälte mbB

(57) **Zusammenfassung**

Die Erfindung betrifft ein Verfahren zum Bezahlen einer Ware an einem Verkaufsautomaten (2) mit einem mobilen Endgerät (3), umfassend die Schritte Bereitstellen eines von dem Endgerät (3) einlesbaren Identifikationscodes, der dem Verkaufsautomaten (2) zugeordnet ist, Einlesen des Identifikationscodes mit dem Endgerät (3), Übertragen des Identifikationscodes von dem Endgerät (3) an einen Bezahlserver (4), Aktivieren des Verkaufsautomaten (2) durch den Bezahlserver (4), Reservieren eines Geldbetrags an dem Verkaufsautomaten (2), Warenauswahl an dem Verkaufsautomaten (2), Übertragen eines zu der Warenauswahl korrespondierenden Geldbetrags von dem Verkaufsautomaten (2) über den Bezahlserver (4) an das Endgerät (3), Autorisierung des zu der Warenauswahl korrespondierenden Geldbetrags durch das Endgerät (3) an den Bezahlserver (4), und Übertragen einer Bestätigungsnachricht von dem Bezahlserver (4) an den Verkaufsautomaten (3). Die Erfindung betrifft außerdem ein System zum Bezahlen einer Ware nach dem obigen Verfahren. Des Weiteren betrifft die Erfindung ein Bezahlmodul (14) zur Verbindung mit einer Steuerungsschnittstelle (12) eines Verkaufsautomaten (2) zur Verwendung in dem Verfahren sowie einen Verkaufsautomaten (2) mit einem solchen Bezahlmodul (14).

## Beschreibung

Die vorliegende Erfindung betrifft ein Verfahren zum Bezahlen einer Ware an einem Verkaufsautomaten mit einem mobilen Endgerät. Weiterhin betrifft die Erfindung ein System zum Bezahlen einer Ware an einem Verkaufsautomaten mit einem mobilen Endgerät, umfassend den Verkaufsautomaten, das Endgerät und einen Bezahlserver, wobei das System ausgeführt ist, das obige Verfahren zum Bezahlen einer Ware mit einem mobilen Endgerät durchzuführen. Auch betrifft die vorliegende Erfindung ein Bezahlmodul zur Verbindung mit einer Steuerungsschnittstelle eines Verkaufsautomaten zum Bezahlen mit einem mobilen Endgerät. Ebenfalls betrifft die vorliegende Erfindung einen Verkaufsautomaten zum Verkaufen einer Ware, wobei der Verkaufsautomat eine Warenauswahleinheit und eine Warenausgabeeinheit, die miteinander in Kommunikationsverbindung sind, aufweist, wobei der Verkaufsautomat weiterhin einen von einem Endgerät einlesbaren Identifikationscode aufweist.

Im Stand der Technik sind Verkaufsautomaten für verschiedenartige Waren bekannt, bei denen die Ware nach einem Bezahlvorgang ausgegeben wird. Die Waren können beispielsweise Getränke, Snacks, Postwertzeichen, Zigaretten oder Fahrkarten sein, um nur einige wenige Warenarten zu nennen. Prinzipiell können die Waren neben körperlichen Produkten auch Dienstleistungen sein, wie beispielsweise der Aufbau einer Telekommunikationsverbindung oder die Übermittlung einer Kurznachricht (SMS). Der Verkaufsautomat weist eine Warenauswahleinheit und eine Warenausgabeeinheit auf. Zusätzlich kann der Verkaufsautomat wenigstens eine zentrale Steuerungseinheit aufweisen, oder Warenauswahleinheit und Warenausgabeeinheit sind mit dezentralen Steuerungseinheiten ausgeführt, um gemeinsam einen Verkaufsprozess durchzuführen.

Für das Bezahlen umfasst der Verkaufsautomat ein Bezahlmodul, wobei der Bezahlvorgang unterschiedlich realisiert sein kann. Das Bezahlmodul ist mit der Steuerungseinheit über die Steuerungsschnittstelle verbunden. Beim Bezahlen mit Bargeld wird üblicherweise zunächst dem Bezahlmodul ein Geldbetrag zugeführt, woraufhin das Bezahlmodul dem Verkaufsautomaten ein entsprechendes Signal gibt, und der Verkaufsautomat eine ausgewählte Ware freigibt. Anschließend wird der Kaufpreis von dem zugeführten Geldbetrag abgezogen, und ein eventueller Restbetrag kann von dem Bezahlmodul ausgegeben oder zum Kauf einer weiteren Ware an dem Verkaufsautomaten verwendet werden. Die Auswahl der Ware kann dabei prinzipiell vor oder nach dem Zuführen des Geldbetrags erfolgen. Der Verkauf wird stets nur abgeschlossen, wenn dem Bezahlmodul zuvor ein ausreichender Geldbetrag für die ausgewählte Ware zugeführt worden ist.

Alternativ ist an Verkaufsautomaten das Bezahlen mit Karten, beispielsweise Kredit- oder Debitkarten, bekannt. Eine entsprechende Karte wird einen Kartenschlitz eines dafür ausgeführten Bezahlmoduls eingeführt, was das Zuführen von Bargeld ersetzt. Nach der Auswahl der gewünschten Ware wird der Kaufpreis über die Karte abgebucht, woraufhin der Verkaufsautomat die ausgewählte Ware freigibt.

Ein solcher Verkaufsautomat ist beispielsweise aus der DE 10 2006 015 255 A1 bekannt. Dabei werden Bezahlmodule, also eine Bezahlmodul zum Bezahlen mit Bargeld oder zum Bezahlen mit Karten, über eine spezifische Schnittstelle, d.h. die Steuerungsschnittstelle, an eine Steuerungseinheit angeschlossen. Die Steuerungsschnittstelle kann Teil eines Steuerungsbusses des Verkaufsautomaten sein, über den dessen Komponenten gemeinsam kommunizieren. Die Steuerungseinheit kommuniziert mit der Bezahleinheit und steuert üblicherweise als zentrale Steuerungseinheit die übrigen Funktionen des Verkaufsautomaten, wie z.B. die Auswahl und Ausgabe der Waren. Alternativ oder zusätzlich können verschiedene dezentrale Steuerungseinheiten gemeinsam den Verkaufsautomaten steuern.

Für Verkaufsautomaten sind für die Anbindung der Bezahleinheit verschiedene Steuerungsschnittstellen bekannt, wie z.B. MDB (multi-drop bus), SimplexV oder CCTalk. Die Steuerungsschnittstellen können mit jeweils proprietären Spezifikationen in Bezug auf Hard- und Software ausgeführt sein. So verwendet der weit verbreitete MDB-Standard beispielsweise eine Versorgungsspannung von 34 Volt und ein Kommunikationsprotokoll mit Datenpaketen von 9 Bit.

Nachteilig an solchen Verkaufsautomaten ist, dass der Ablauf beim Verkauf von Waren festgelegt ist, wodurch die Verwendung von unterschiedlichen Bezahleinheiten erschwert wird. Gleichzeitig ist ein Austausch von Verkaufsautomaten beim Aufkommen neuer Bezahlverfahren aufgrund der hohen Anzahl in Betrieb befindlicher Verkaufsautomaten nicht möglich, da dies einen erheblichen Kostenaufwand verursachen würde.

Weiterhin ist nachteilig, dass bekannte elektronische Bezahlverfahren, beispielsweise zur Bezahlung mit Karten, eine spezielle Hardware im Automaten, beispielsweise einen Kartenleser, erfordern, die wegen notwendiger Zertifizierungen nach PCI (Payment Card Industry Data Security Standard) mit hohen Kosten verbunden sind. Eine PCI-Zertifizierung ist beispielsweise erforderlich, wenn persönliche Daten eines Kunden bzw. Daten seiner Karte übermittelt werden. Des Weiteren sind bei bisherigen Lösungen die Kosten pro Verkaufsvorgang sehr hoch, so dass sich der Einsatz im niedrigpreisigen Geschäft mit Verkaufsautomaten kaum lohnt.

Ausgehend von dem oben genannten Stand der Technik liegt der Erfindung somit die Aufgabe zugrunde, ein Verfahren zum Bezahlen einer Ware an einem Verkaufsautomaten mit einem mobilen Endgerät und ein System zur Durchführung dieses Verfahrens anzugeben, die eine hohe Datensicherheit gewährleisten, einen Bezahlvorgang zuverlässig abwickeln, für verschiedene Verkaufsautomaten anwendbar sind und kostengünstig umzusetzen sind. Außerdem liegt der Erfindung die Aufgabe zugrunde, ein Bezahlmodul zur Verbindung mit einer Steuerungsschnittstelle eines Verkaufsautomaten zum Bezahlen mit einem mobilen Endgerät anzugeben, das die Durchführung des obigen Verfahrens auf unterschiedlichen Verkaufsautomaten ermöglicht, wobei die Verkaufsautomaten auf einfache Weise mit dem Bezahlmodul ausgestattet werden können. Ebenfalls ist es Aufgabe der vorliegenden Erfindung einen Verkaufsautomaten zum Verkaufen einer Ware anzugeben, der ein einfaches und sicheres Bezahlen mit einem mobilen Endgerät ermöglicht.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum Bezahlen einer Ware an einem Verkaufsautomaten mit einem mobilen Endgerät angegeben, umfassend die Schritte Bereitstellen eines von dem Endgerät einlesbaren Identifikationscodes, der dem Verkaufsautomaten zugeordnet ist, Einlesen des Identifikationscodes mit dem Endgerät, Übertragen des Identifikationscodes von dem Endgerät an einen Bezahlserver, Aktivieren des Verkaufsautomaten durch den Bezahlserver, Reservieren eines Geldbetrags an dem Verkaufsautomaten, Warenauswahl an dem Verkaufsautomaten, Übertragen eines zu der Warenauswahl korrespondierenden Geldbetrags von dem Verkaufsautomaten über den Bezahlserver an das Endgerät, Autorisierung des zu der Warenauswahl korrespondierenden Geldbetrags durch das Endgerät an den Bezahlserver, und Übertragen einer Bestätigungsnachricht von dem Bezahlserver an den Verkaufsautomaten.

Erfindungsgemäß ist zusätzlich ein System zum Bezahlen einer Ware an einem Verkaufsautomaten mit einem mobilen Endgerät, umfassend den Verkaufsautomaten, das Endgerät und einen Bezahlserver angegeben, wobei das System ausgeführt ist, das obige Verfahren zum Bezahlen einer Ware mit einem mobilen Endgerät durchzuführen.

Erfindungsgemäß ist weiterhin ein Bezahlmodul zur Verbindung mit einer Steuerungsschnittstelle eines Verkaufsautomaten zum Bezahlen mit einem mobilen Endgerät, wobei das Bezahlmodul ausgeführt ist, folgende Schritte durchzuführen: Empfangen eines Aktivierungsbefehl von einem Bezahlserver, Signalisieren des Reservierens eines Geldbetrags über die Steuerungsschnittstelle, Empfangen eines zu einer Warenauswahl korrespondierenden Geldbetrags über die Steuerungsschnittstelle, Übertragen des zu der Warenauswahl korrespondierenden Geldbetrags an den Bezahlserver, Empfangen einer Bestätigungsnachricht von dem Bezahlserver als Abschluss des Bezahlvorgangs, und Signalisieren des Abschlusses des Bezahlvorgangs über die Steuerungsschnittstelle.

Erfindungsgemäß ist ebenfalls ein Verkaufsautomat zum Verkaufen einer Ware angegeben, wobei der Verkaufsautomat eine Warenauswahleinheit, und eine Warenausgabeeinheit, die miteinander in Kommunikationsverbindung sind, aufweist, wobei der Verkaufsautomat weiterhin einen von einem Endgerät einlesbaren Identifikationscode aufweist, wobei der Verkaufsautomat mit einer Steuerungsschnittstelle ausgeführt ist und ein oben angegebenes Bezahlmodul umfasst, das mit der Steuerungsschnittstelle verbunden ist.

Grundidee der vorliegenden Erfindung ist es also, ein Verfahren zum Bezahlen zur Verfügung zu stellen, dass unter Berücksichtigung der Abläufe bei verfügbaren Verkaufsautomaten durchgeführt wird. Somit können verfügbare Verkaufsautomaten einfach durch Austausch oder Hinzufügen eines Bezahlmoduls in die Lage versetzt werden, das Verfahren zum Bezahlen durchzuführen. Durch die fehlende unmittelbare Kommunikation zwischen dem Endgerät und dem Verkaufsautomaten betreffend den Kauf- und/oder Bezahlvorgang können beide einfach und kostengünstig bereitgestellt werden, wobei gleichzeitig der Bezahlvorgang mit einer hohen Zuverlässigkeit und Sicherheit durchgeführt werden kann. Eine zugrundeliegende Finanztransaktion kann durchgeführt werden, indem lediglich beide Seiten, d.h. das Endgerät wie auch der Verkaufsautomat, dem Bezahlserver entsprechende Nachrichten schicken. Kostenträchtige Zertifizierungen, beispielsweise nach PCI, können damit entfallen.

Das mobile Endgerät kann ein prinzipiell beliebiges Gerät zur Kommunikation mit dem Bezahlserver sein. Als mobiles Endgerät ist es vorzugsweise mit einer Funkübertragungseinrichtung zur Kommunikation mit dem Bezahlserver ausgeführt, beispielsweise als Mobiltelefon, Tablet-Computer oder ähnliches. Übliche Standards zur Datenübertragung mit einem Funknetz umfassen GSM, GPRS, UMTS, LTE oder andere. Prinzipiell ist auch eine Nutzung lokaler Kommunikationsnetze im Bereich des Verkaufsautomaten möglich, beispielsweise über WLAN oder Bluetooth.

Die Kommunikation zwischen dem Verkaufsautomaten und dem Bezahlserver kann als eine beliebige Datenkommunikation ausgeführt sein, entweder über Kabel oder die Luftschnittstelle, beispielsweise nach dem GSM, UMTS oder LTE Standard. Die Datenkommunikation kann über eine permanente Verbindung erfolgen, oder die Verbindung wird im Bedarfsfall jeweils aufgebaut. Vorteilhafterweise ist die Verbindung eine permanente Verbindung, um eine schnelle Übermittlung von Daten zwischen dem Verkaufsautomaten und dem Bezahlserver zu ermöglichen.

Die Kommunikation zwischen dem Endgerät und dem Bezahlserver und/oder zwischen dem Bezahlserver und dem Verkaufsautomaten erfolgt vorzugsweise als sichere Kommunikation, indem die Datenübertragung autorisiert und/oder verschlüsselt wird. Hierzu sind unterschiedliche Techniken im Stand der Technik bekannt, die dem Fachmann bekannt sind und auf die hier nicht im Detail eingegangen wird. Weiter bevorzugt ist das System ausgeführt, übertragene Nachrichten zu bestätigen. Besonders bevorzugt ist das System ausgeführt, eine Nachricht zu bestätigen, wenn eine durch die Nachricht ausgelöste Aktion auf der Empfängerseite bestätigt worden ist.

Der Identifikationscode dient der eindeutigen Identifikation eines Verkaufsautomaten. Der Code kann dabei eine prinzipiell beliebige Kodierung aufweisen, die im Stand der Technik bekannt sind. Der Identifikationscode ist ebenfalls dem Bezahlserver bekannt, um den Bezahlvorgang dem korrekten Verkaufsautomaten mit diesem Code zuordnen zu können und mit dem korrekten Verkaufsautomaten zur Durchführung des Verfahrens kommunizieren zu können.

Das Einlesen des Identifikationscodes mit dem Endgerät kann abhängig von der Art des Identifikationscodes und des verwendeten Mediums zur Bereitstellung des Identifikationscodes auf unterschiedliche Weise erfolgen. Möglich sind sowohl eine optische oder akustische Bereitstellung des Identifikationscodes. Ebenfalls kann der Identifikationscode als elektromagnetisches Signal von dem Endgerät ausgelesen werden, beispielsweise unter Nutzung eines Kurzreichweitenfunkstandards, beispielsweise NFC, oder mittels eines RF-ID-tags.

Der Bezahlserver ist ein Server zur Durchführung einer den Kauf an dem Verkaufsautomaten ermöglichenden Finanztransaktion. Die Finanztransaktion kann unterschiedlich durchgeführt werden, beispielsweise durch das Abbuchen eines Zahlbetrags von einem Bank- oder Kreditkartenkonto, durch Verrechnen mit einem Guthaben auf dem Bezahlserver, oder durch Belastung mittels einer Telefonrechnung für die Nutzung eines Funknetzes mit dem mobilen Endgerät.

Das Aktivieren des Verkaufsautomaten durch den Bezahlserver, erfolgt durch das Übermitteln eines Aktivierungsbefehls von dem Bezahlserver an den Verkaufsautomaten. Die Übermittlung des Aktivierungsbefehls erfolgt basierend auf Kommunikationsdaten, die dem Verkaufsautomaten basierend auf dessen Identifikationscode zugeordnet sind. Entsprechend sind in dem Bezahlserver vorzugsweise Datensätze umfassend einen Identifikationscode und diesem zugeordnete Kommunikationsdaten gespeichert. Das Bezahlmodul empfängt diesen Aktivierungsbefehl und signalisiert das Reservieren eines Geldbetrags über die Steuerungsschnittstelle.

Das Reservieren eines Geldbetrags an dem Verkaufsautomaten entspricht dem Zuführen von Bargeld bei einem Verkaufsautomaten mit einem entsprechenden Bezahlmodul. Damit kann das erfindungsgemäße Bezahlmodul auf einfache Weise in einem beliebigen Verkaufsautomaten verwendet werden, da der Ablauf dem bekannten Ablauf bei der Verwendung von Bargeld entspricht.

Die Warenauswahl an dem Verkaufsautomaten wird wie gewohnt durchgeführt. Ein zu der Warenauswahl korrespondierender Geldbetrag wird von dem Verkaufsautomaten über die Steuerungsschnittstelle an das Bezahlmodul signalisiert, woraufhin dieses den zu der Warenauswahl korrespondierenden Geldbetrag an den Bezahlserver überträgt. Dieser wiederum leitet den mit der Warenauswahl korrespondierenden Geldbetrag an das Endgerät weiter. Vorzugsweise werden von dem Bezahlserver zusätzlich Informationen zur Identifizierung des Verkaufsautomaten an das Endgerät übertragen. Diese Informationen können eine Standortidentifikation des Verkaufsautomaten umfassen, und von dem Verkaufsautomaten zur Weiterleitung an den Bezahlserver gesendet werden. Alternativ kann der Bezahlserver diese Informationen basierend auf den darin gespeicherten Informationen über den Verkaufsautomaten seiner Nachricht an das Endgerät hinzufügen.

Die Autorisierung des zu der Warenauswahl korrespondierenden Geldbetrags durch das Endgerät stellt sicher, dass die Bezahlung nur dann vorgenommen wird, wenn dessen Nutzer dies veranlasst. Ein Missbrauch des Bezahlverfahrens wird dadurch erschwert. Entsprechend wird eine Bestätigungsnachricht von dem Endgerät an den Bezahlserver gesendet, wodurch dieser ermächtigt wird, die Finanztransaktion zur Bezahlung des Geldbetrags durchzuführen. Außerdem wird von dem Bezahlserver eine Bestätigungsnachricht an das Bezahlmodul versendet. Dieses signalisiert dem Verkaufsautomaten den Abschluss des Bezahlvorgangs über die Steuerungsschnittstelle. Anschließend kann von dem Verkaufsautomaten beispielsweise über dessen Warenausgabeeinheit die gekaufte Ware ausgegeben werden. Die Finanztransaktion kann nach der Autorisierung prinzipiell zu einem beliebigen Zeitpunkt durchgeführt werden. Um mögliche Rückbuchungen bei einer fehlerhaften Warenausgabe zu vermeiden, wird die Finanztransaktion vorzugsweise erst durchgeführt, wenn der Verkaufsautomat an den Bezahlserver die erfolgreiche Warenausgabe gemeldet hat.

Warenauswahleinheit und Warenausgabeeinheit können abhängig von der Ware prinzipiell beliebig ausgestaltet sein. Die Kommunikationsverbindung kann unmittelbar zwischen Warenauswahleinheit und Warenausgabeeinheit ausgebildet sein, oder Warenauswahleinheit und Warenausgabeeinheit Kommunizieren beispielsweise über eine von diesen separate Steuerungseinheit miteinander.

Zur Durchführung ist vorzugsweise auf dem Endgerät eine Applikation installiert oder installierbar, die bei der Durchführung des Bezahlvorgangs die erforderlichen Nachrichten von dem Bezahlserver empfängt bzw. an diesen überträgt. Die Applikation umfasst entsprechend eine Funktion zur Autorisierung eines Verkaufs durch dessen Nutzer. Diese Applikation ist vorzugsweise als sogenannte "App" zur Ausführung auf einem Mobilbetriebssystem, beispielsweise Android, IOS oder Windows Mobile, ausgeführt.

Das Bezahlmodul kann dabei prinzipiell eine einfach austauschbare Einheit sein, die sowohl interner Bestandteil des Verkaufsautomaten wie auch extern mit diesem verbunden werden kann, wenn die Steuerungsschnittstelle des Verkaufsautomaten nach außen geführt ist. Beispielsweise kann das Bezahlmodul durch Einschieben in einen korrespondierenden Einschub des Verkaufsautomaten mit diesem verbindbar sein. Insbesondere kann das Bezahlmodul durch das Einschieben mit der Steuerungsschnittstelle des Verkaufsautomaten verbindbar sein.

Der Verkaufsautomat kann lediglich ein erfindungsgemäßes Bezahlmodul aufweisen oder mit diesem verbindbar sein, oder eine Mehrzahl Bezahlmodule. Dadurch kann das Bezahlen auf unterschiedliche Weisen ermöglicht werden.

Die Steuerungsschnittstelle kann beliebig ausgeführt sein. Vorzugsweise ist die Steuerungsschnittstelle eine Schnittstelle wie z.B. MDB (multi-drop bus), SimplexV oder CCTalk. Entsprechend kann die Schnittstelle als Bus bzw. Teil eines Busses ausgeführt sein, der von allen Komponenten des Verkaufsautomaten zur Kommunikation miteinander nutzbar ist.

Die Waren können beispielsweise Getränke, Snacks, Postwertzeichen, Zigaretten oder Fahrkarten sein, um nur einige wenige Warenarten zu nennen. Prinzipiell können die Waren neben körperlichen Produkten auch Dienstleistungen sein, wie beispielsweise der Aufbau einer Telekommunikationsverbindung oder die Übermittlung einer Kurznachricht (SMS).

In vorteilhafter Ausgestaltung der Erfindung ist der Identifikationscode ein QR-Code, und das Einlesen des Identifikationscodes mit dem Endgerät umfasst das Aufnehmen eines Bildes des QR-Codes mit einer Kamera des Endgeräts. QR-Codes sind zur einfachen Eingabe von Daten über eine Kamera gut geeignet und in der Lage, eine große Menge von Informationen bereitzustellen, beispielsweise um eine große Anzahl von Verkaufsautomaten mit einem solchen QR-Code versehen zu können. Die Handhabung eines QR-Codes ist einfach und heutzutage in verschiedenen Bereich bereits üblich, so dass sich eine gute Akzeptanz dieses Codes durch einen Benutzer ergibt.

Der Identifikationscode kann an dem Verkaufsautomaten angebracht sein, oder durch diesen ausgegeben werden. Im Falle des obigen QR-Codes bedeutet dies, dass der QR-Code beispielsweise in der Form eines Aufklebers an dem Verkaufsautomaten außenseitig aufgebracht sein kann. Alternativ kann der QR-Code auf einem Display des Verkaufsautomaten ausgegeben werden. Auch für die Ausgabe über NFC-Technologien ist sowohl die Verwendung von fest einprogrammierten Identifikationscodes, beispielsweise in der Form eines RF-ID tags, wie auch von einem durch den Verkaufsautomaten bzw. dessen Bezahlmodul selbst bereitgestellten Identifikationscode möglich.

In vorteilhafter Ausgestaltung der Erfindung umfasst das Verfahren den zusätzlichen Schritt des Versendens einer Quittung von dem Verkaufsautomaten an den Bezahlserver. Die Quittung kann vorzugsweise von dem Bezahlserver an das Endgerät weitergeleitet werden, so dass ein Nutzer seine Käufe mit dem erfindungsgemäßen Bezahlverfahren leicht nachvollziehen kann. Außerdem kann die Quittung Anhaltspunkte für eine Manipulation des Verkaufsvorgangs auf Seite des Verkaufsautomaten liefern. Auch kann die Quittung von dem Verkaufsautomaten den Bezahlserver veranlassen, die Finanztransaktion durchzuführen. In diesem Fall würde die Finanztransaktion beim Ausbleiben der Quittung nach einem Timeout storniert.

In vorteilhafter Ausgestaltung der Erfindung umfasst der Schritt der Warenauswahl an dem Verkaufsautomaten die Warenauswahl bis zu dem reservierten Geldbetrag. Somit können Möglichkeiten zum Missbrauch des Bezahlverfahrens reduziert werden. Außerdem kann ein übermäßiger Gebrauch des Verkaufsautomaten, was ebenfalls auf einen Missbrauch hinweisen kann, eingeschränkt werden.

In vorteilhafter Ausgestaltung der Erfindung umfasst der Schritt des Bereitstellens eines von dem Endgerät einlesbaren Identifikationscodes das dynamische Erzeugen und das Ausgeben des Identifikationscodes über ein Interface. Entsprechend kann der Identifikationscode beispielsweise an einen jeweiligen Standort angepasst werden, beispielsweise wenn der Verkaufsautomat mobil verwendet wird. Auch kann der bei der Durchführung des Verfahrens zu reservierende Geldbetrag über den Identifikationscode angepasst werden, beispielsweise wenn nur noch wenige Waren verfügbar sind, oder ein Fehler an dem Verkaufsautomaten aufgetreten ist. Beispielsweise kann bei Ausfall der Datenkommunikation des Bezahlmoduls mit dem Bezahlserver ein entsprechender Identifikationscode erzeugt werden, so dass der Ausfall von dem Endgerät an den Bezahlserver gemeldet werden kann. Auch kann abhängig von Ort, Zeit und/oder Warenverfügbarkeit der Identifikationscode angepasst werden. Dazu kann der Verkaufsautomat bzw. das Bezahlmodul beispielsweise im Falle der Verwendung eines QR-Codes mit einem Display zur Anzeige des QR-Codes ausgeführt sein. Alternativ kann ein beliebiges Interface zum Ausgeben des entsprechenden Identifikationscodes verwendet werden, beispielsweise über eine Funkschnittstelle nach einem Kurzreichweitenstandard NFC.

In vorteilhafter Ausgestaltung der Erfindung umfasst der Schritt des Aktivierens des Verkaufsautomaten durch den Bezahlserver das übermitteln des zu reservierenden Geldbetrags. Dieser Geldbetrag kann beispielsweise abhängig von Bonität des Nutzers des Endgeräts, einem Guthaben auf dem Bezahlserver, Uhrzeit zum Zeitpunkt des Verkaufs, Standort des Verkaufsautomaten oder ähnlichem bestimmt werden. Damit kann ein Missbrauch eingeschränkt werden. Auch kann ein Risiko für einen Zahlungsausfall reduziert werden.

In vorteilhafter Ausgestaltung der Erfindung umfasst das Verfahren den zusätzlichen Schritt des Registrierens eines Nutzers des Endgeräts an dem Bezahlserver. Durch diese Registrierung kann das Verfahren besonders einfach und schnell durchgeführt werden. Bei der Registrierung können beispielsweise Nutzerdaten mit Daten zur Durchführung einer Finanztransaktion gespeichert werden, so dass diese nicht bei jeder Nutzung eines Verkaufsautomaten erneut eingegeben werden müssen. Die Registrierung kann im Zusammenhang mit einer ersten Nutzung eines Verkaufsautomaten oder vorab erfolgen.

Nachfolgend wird die Erfindung unter Bezugnahme auf die anliegende Zeichnung anhand bevorzugter Ausführungsformen näher erläutert.

Es zeigen
- Fig. 1: eine schematische Darstellung eines erfindungsgemäßen Systems zur Durchführung eines Bezahlvorgangs an einem Verkaufsautomaten mit einem mobilen Endgerät gemäß einer bevorzugten Ausführungsform,
- Fig. 2: eine Detailansicht einer Hardware eines Bezahlmoduls des Verkaufsautomaten aus Fig. 1,
- Fig. 3: eine Detailansicht einer Software des Bezahlmoduls des Verkaufsautomaten aus Fig. 1,
- Fig. 4: ein Ablaufdiagramm einer Anmeldung des Bezahlmoduls des Verkaufsautomaten an einem in Fig. 1 dargestellten Bezahlserver,
- Fig. 5: ein Ablaufdiagramm eines Bezahlvorgangs mit dem Bezahlmoduls des Verkaufsautomaten an dem in Fig. 1 dargestellten Bezahlserver mit einem Bezahlverfahren gemäß einer bevorzugten Ausführungsform,

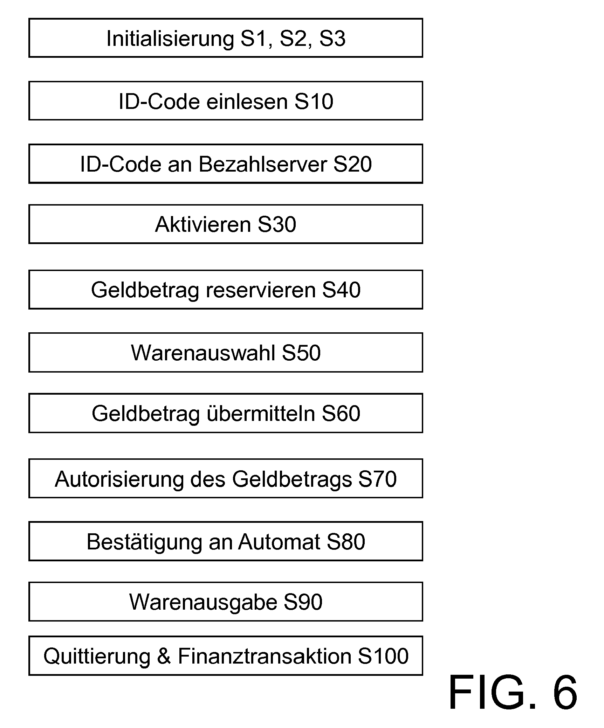

- Fig. 6: das Bezahlverfahren gemäß der bevorzugten Ausführungsform im Detail, und
- Fig. 7: ein Ablaufdiagramm eines Bezahlvorgangs in Übereinstimmung mit Fig. 5, wobei der Bezahlvorgang an dem Endgerät abgebrochen wird.

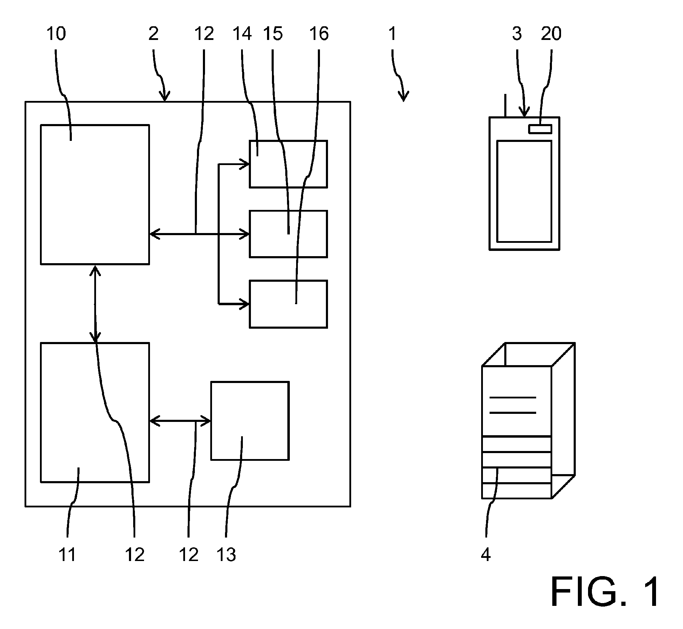

Die Figur 1 zeigt ein erfindungsgemäßes System 1 zur Durchführung eines Bezahlvorgangs an einem Verkaufsautomaten 2 unter Verwendung eines mobilen Endgeräts 3 gemäß einer bevorzugten Ausführungsform. Das System 1 umfasst entsprechend den Verkaufsautomaten 2 und das mobile Endgerät 3 sowie einen Bezahlserver 4.

Der Verkaufsautomat 2 ist zum Verkaufen einer Ware, hier beispielsweise Snacks, ausgeführt. Der Verkaufsautomat 2 umfasst eine Warenauswahleinheit 10 und eine Warenausgabeeinheit 11, die miteinander über einen Bus 12 in Kommunikationsverbindung sind. Der Bus 12 ist als multi-drop bus (MDB) ausgeführt. Der Verkaufsautomat 2 umfasst weiterhin eine Anzeigeeinheit 13 zur Anzeige eines von dem Endgerät 3 einlesbaren Identifikationscodes in der Form eines QR-Codes. Über den Bus 12 wird der Anzeigeeinheit 13 der auszugebende QR-Code mitgeteilt. In einer alternativen Ausführungsform ist der QR-Code auf dem Verkaufsautomaten aufgebracht, beispielsweise in der Form eines Aufklebers.

Weiterhin weist der Verkaufsautomat 2 eine Mehrzahl Bezahlmodule 14, 15, 16 auf, die mi dem Bus 12 als Steuerungsschnittstelle verbunden sind. Die Bezahlmodule 14, 15, 16 sind unterschiedlich ausgestaltet, wobei Bezahlmodul 14 zum mobilen Bezahlen ausgeführt ist, was nachstehend im Detail erläutert wird, Bezahlmodul 15 als Kartenterminal 15 ausgeführt ist und Bezahlmodul 16 als Bargeldmodul 16 ausgeführt ist.

Die Bezahlmodule 14, 15, 16 sind hier als einfach austauschbare Einheiten in dem Verkaufsautomaten 2 ausgeführt. Die Bezahlmodule 14, 15, 16 können durch Einschieben in korrespondierende, hier nicht sichtbare Einschübe des Verkaufsautomaten 2 mit diesem verbunden werden, wobei gleichzeitig eine Verbindung mit dem Bus 12 hergestellt wird.

Das mobile Endgerät 3 ist in diesem Ausführungsbeispiel als Mobiltelefon mit einer Funkübertragungseinrichtung 20 ausgeführt, die eine Kommunikation nach den Standards GSM, GPRS, UMTS und LTE über Luftschnittstelle 27 mit dem Bezahlserver 4 ermöglicht. Die Funkübertragungseinrichtung 20 ist durch eine Antenne angedeutet. Auf dem Endgerät 3 ist eine Applikation installiert, die bei der Durchführung des nachfolgend beschriebenen Bezahlvorgangs versandte Nachrichten von dem Bezahlserver 4 empfängt bzw. an diesen überträgt.

Der Bezahlserver 4 ist ein Server zur Durchführung einer Finanztransaktion. Die Finanztransaktion wird hier durchgeführt, indem ein Zahlbetrag von einem Bankkonto per Lastschriftverfahren (ELV) abgebucht und anschließend auf ein dem Verkaufsautomaten 2 zugeordnetes Konto gutgeschrieben wird.

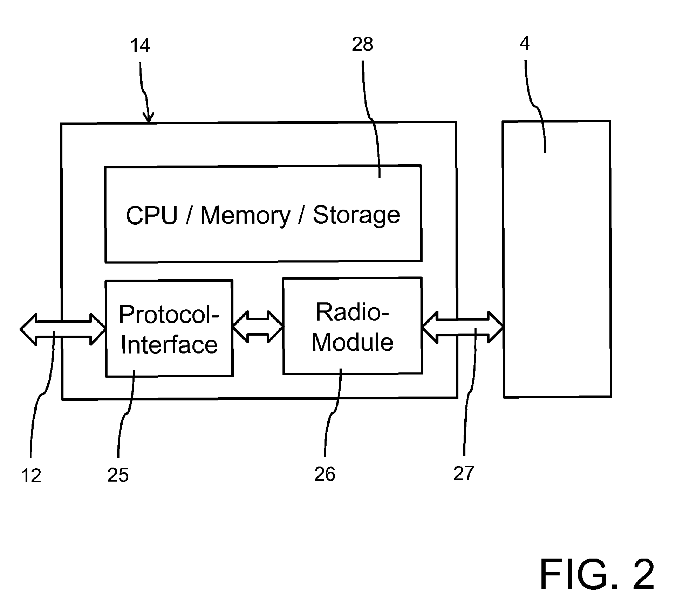

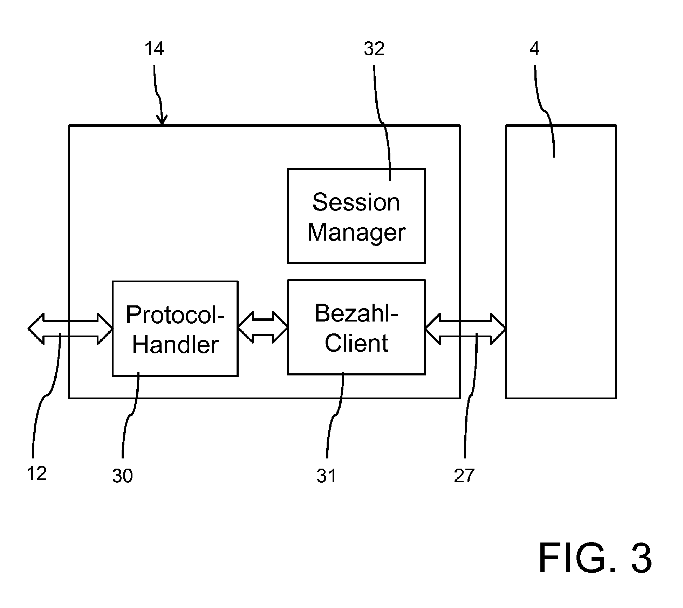

Das Bezahlmodul 14 ist zur Verbindung mit dem Bus 12 des Verkaufsautomaten 2 als Steuerungsschnittstelle ausgeführt. Eine Hardware des Bezahlmoduls 14 umfasst in diesem Ausführungsbeispiel, wie in Fig. 2 gezeigt, ein Protokollinterface 25 zur Kommunikation über den Bus 12, ein Funkmodul 26 zur Kommunikation über die Luftschnittstelle 27 mit dem Bezahlserver 4, und eine Prozessoreinheit 28 mit CPU und Speicher, die gemeinsam dargestellt sind. Eine Software des Bezahlmoduls 14, die von der CPU ausgeführt wird, umfasst, wie in Fig. 3 gezeigt, in diesem Ausführungsbeispiel einen Protocol-Handler 30 für die Kommunikation über den Bus 12, einen Bezahl-Client 31, der Nachrichten mit dem Bezahlserver 4 austauscht, sowie einen Session Manager 32, der die darunter liegende Verbindung über das Funkmodul 26 mit dem Bezahlserver 4 durchführt.

Die Kommunikation zwischen dem Verkaufsautomaten 2 und dem Bezahlserver 4 erfolgt über eine permanente Verbindung, während die Verbindung zwischen dem Endgerät 3 und dem Bezahlserver 4 nur bei Bedarf hergestellt wird. Die Kommunikation zwischen dem Endgerät 3, dem Bezahlserver 4 und dem Verkaufsautomaten 2 erfolgt als sichere Kommunikation, indem die Datenübertragung verschlüsselt wird.

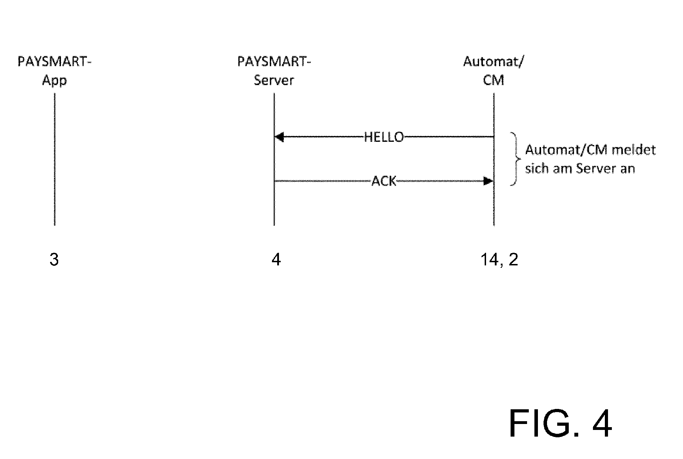

Das erfindungsgemäße Verfahren zum Bezahlen einer Ware an dem Verkaufsautomaten 2 mit dem mobilen Endgerät 3 wird in diesem Beispiel nach einer Initialisierung durchgeführt. Die Initialisierung umfasst als einen Initialisierungsschritt S1, der eine initiale Anmeldung des Verkaufsautomaten 2 über das Bezahlmodul 14 zum mobilen Bezahlen an dem Bezahlserver 4 umfasst, wie in Fig. 4 gezeigt.

Auch erfolgt als Teil der Initialisierung in einem Initialisierungsschritt S2 eine Registrierung eines Nutzers des Endgeräts 3 an dem Bezahlserver 4. Bei der Registrierung werden Nutzerdaten sowie Daten zur Durchführung der Finanztransaktionen von dem Bezahlserver 4 gespeichert.

Als weiter Teil der Initialisierung wird in einem Initialisierungsschritt S3 der QR-Code als von dem Endgerät 3 einlesbarer Identifikationscode, der dem Verkaufsautomaten 2 zugeordnet ist, von dessen Anzeigeeinheit 14 ausgegeben.

Die vorstehend beschriebenen Initialisierungsschritte S1, S2, S3 können unabhängig voneinander in beliebiger Reihenfolge durchgeführt werden.

Das Verfahren beginnt mit Schritt S10. In Schritt S10 wird der Identifikationscode des Verkaufsautomaten 2 von dessen Anzeigeeinheit 14 mit einer Kamera 35 des Endgeräts 3 eingelesen. Dazu wird die Applikation auf dem Endgerät 3 gestartet und mit der Kamera 35 ein Bild des QR-Codes aufgenommen. Der QR-Code wird anschließend von der Applikation in dem Endgerät 3 ausgewertet.

In Schritt S20 wird der Identifikationscode durch die Applikation von dem Endgerät 3 an den Bezahlserver 4 übertragen.

In Schritt S30 erfolgt ein Aktivieren des Verkaufsautomaten 2 durch den Bezahlserver 4, indem von dem Bezahlserver 4 eine Aktivierungsnachricht an das Bezahlmodul 14 des Verkaufsautomaten 2 geschickt wird. Dazu wertet der Bezahlserver 4 den von dem Endgerät 3 übertragenen Identifikationscode aus. Aus der initialen Anmeldung des Verkaufsautomaten 2 an dem Bezahlserver 4 ist diesem der übermittelte Identifikationscode bekannt, so dass der Bezahlserver 4 dem Identifikationscode zugeordnete Kommunikationsdaten aus seinem Speicher ermitteln kann. Mit diesen Kommunikationsdaten kann der Bezahlserver 4 mit dem korrekten Verkaufsautomaten 2 zur weiteren Durchführung des Verfahrens kommunizieren.

In Schritt S40 wird der Aktivierungsbefehl von dem Bezahlmodul 14 empfangen und ein Geldbetrag in dem Verkaufsautomaten 2 reserviert. Das Bezahlmodul 14 signalisiert das Reservieren des Geldbetrags über den Bus 12.

In Schritt S50 erfolgt eine Warenauswahl an dem Verkaufsautomaten 2. Der Nutzer des Endgeräts 2 führt die Warenauswahl unter Verwendung der Warenauswahleinheit 10 durch. Die Warenauswahl an dem Verkaufsautomaten 2 ist dabei auf den reservierten Geldbetrag begrenzt. Ein zu der Warenauswahl korrespondierender Geldbetrag wird von der Warenauswahleinheit 10 über den Bus 12 an das Bezahlmodul 14 signalisiert.

In Schritt S60 erfolgt Übertragen des zu der Warenauswahl korrespondierenden Geldbetrags von dem Verkaufsautomaten 2 über den Bezahlserver 4 an das Endgerät 3. Dazu wird von dem Bezahlmodul 14 der zu der Warenauswahl korrespondierende Geldbetrag an den Bezahlserver 4 übermittelt. Dieser Betrag wird von dem Bezahlserver 4 zusammen mit Informationen zur Identifizierung des Verkaufsautomaten 2, in diesem Ausführungsbeispiel einer Position des Verkaufsautomaten 2, an das Endgerät 3 übertragen. Der Bezahlserver 4 fügt die Position basierend auf seinen gespeicherten Informationen über den Verkaufsautomaten 2 seiner Nachricht an das Endgerät 3 hinzu. In dem Endgerät 3 werden der zu der Warenauswahl korrespondierende Geldbetrag und die Position des Verkaufsautomaten 2 von der Applikation empfangen.

In Schritt S70 erfolgt eine Autorisierung des zu der Warenauswahl korrespondierenden Geldbetrags durch das Endgerät 3 an den Bezahlserver 4. Dazu wird zunächst von der Applikation eine Autorisierung des Bezahlvorgangs durch den Nutzer veranlasst. Die Applikation gibt dazu den übermittelten Geldbetrag mit der Position des Verkaufsautomaten 2 in ihrem User Interface aus, woraufhin der Nutzer den Betrag über das User Interface bestätigen kann. Daraufhin wird durch die Applikation eine Bestätigungsnachricht von dem Endgerät 3 an den Bezahlserver 4 geschickt, die eine Finanztransaktion des Bezahlservers für den zu der Warenauswahl korrespondierenden Geldbetrag autorisiert.

In Schritt S80 erfolgt das Übertragen einer Bestätigungsnachricht von dem Bezahlserver 4 an das Bezahlmodul 14 des Verkaufsautomaten 2. Dadurch wird dem Verkaufsautomaten 2 die erfolgreiche Autorisierung der Finanztransaktion mitgeteilt. Das Bezahlmodul 14 signalisiert nach dem Empfang der Bestätigungsnachricht den Abschluss des Bezahlvorgangs über den Bus 12.

In Schritt S90 wird von der Warenausgabeeinheit 11 des Verkaufsautomaten 2 die zuvor über die Warenauswahleinheit 10 ausgewählte Ware ausgegeben.

In Schritt S100 wird die erfolgte Warenausgabe von der Warenausgabeeinheit 11 an das Bezahlmodul 14 signalisiert. Das Bezahlmodul 14 versendet daraufhin einer Quittung an den Bezahlserver 4, und der Bezahlserver 4 führt die zuvor in Schritt S70 autorisierte Finanztransaktion durch. Entsprechend wird der zu der Warenauswahl korrespondierende Geldbetrag als Zahlbetrag von dem Bankkonto per Lastschriftverfahren abgebucht und anschließend auf das dem Verkaufsautomaten 2 zugeordnete Konto gutgeschrieben. Die Quittung wird außerdem von dem Bezahlserver 4 an das Endgerät 3 weitergeleitet.

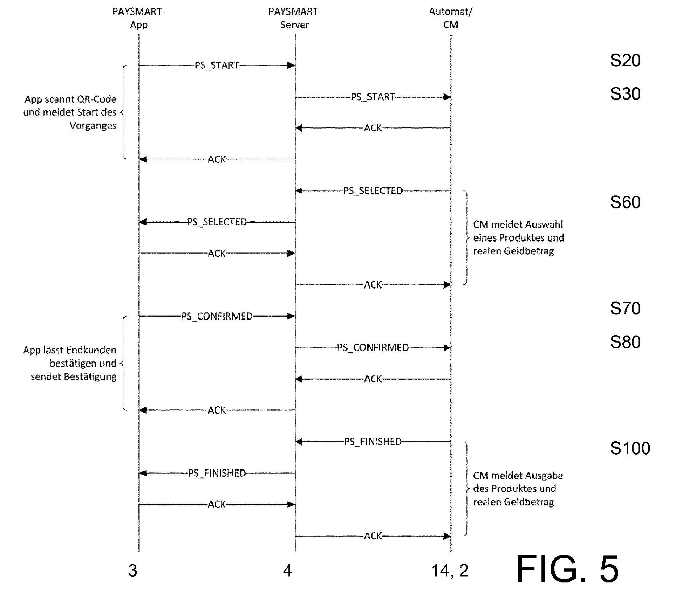

Wie in Fig. 5 gezeigt werden gemäß dem beschriebenen Verfahren alle Nachrichten nach vollständiger Übertragung mit einem ACK bestätigt.

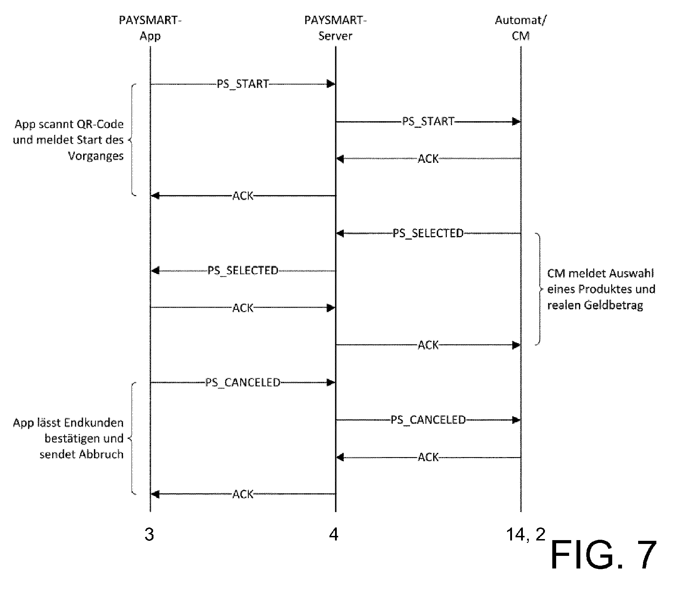

In Fig. 7 ist ein Ablaufdiagram eines zuvor beschriebenen Bezahlvorgangs gezeigt, wobei der Bezahlvorgang an dem Endgerät 3 abgebrochen wird. Das Verfahren beginnt wie zuvor beschrieben. Abweichend davon erfolgt in Schritt S70 keine Autorisierung des zu der Warenauswahl korrespondierenden Geldbetrags durch den Nutzer. Entsprechend wird durch die Applikation eine Abbruchnachricht von dem Endgerät 3 an den Bezahlserver 4 gesendet und der Bezahlvorgang abgebrochen.

### Bezugszeichenliste

- System: 1
- Verkaufsautomat: 2
- mobiles Endgerät: 3
- Bezahlserver: 4
- Warenauswahleinheit: 10
- Warenausgabeeinheit: 11
- Bus, Steuerungsschnittstelle: 12
- Anzeigeeinheit: 13
- Bezahlmodul, mobiles Bezahlen: 14
- Bezahlmodul, Kartenterminal: 15
- Bezahlmodul, Bargeldmodul: 16
- Funkübertragungseinrichtung, Antenne: 20
- Protokollinterface: 25
- Funkmodul: 26
- Luftschnittstelle: 27
- Prozessoreinheit: 28
- Protocol-Handler: 30
- Bezahl-Client: 31
- Session Manager: 32
- Kamera: 35

## Patentansprüche

1. Verfahren zum Bezahlen einer Ware an einem Verkaufsautomaten (2) mit einem mobilen Endgerät (3), umfassend die Schritte
Bereitstellen eines von dem Endgerät (3) einlesbaren Identifikationscodes, der dem Verkaufsautomaten (2) zugeordnet ist,
Einlesen des Identifikationscodes mit dem Endgerät (3),
Übertragen des Identifikationscodes von dem Endgerät (3) an einen Bezahlserver (4),
Aktivieren des Verkaufsautomaten (2) durch den Bezahlserver (4),
Reservieren eines Geldbetrags an dem Verkaufsautomaten (2),
Warenauswahl an dem Verkaufsautomaten (2),
Übertragen eines zu der Warenauswahl korrespondierenden Geldbetrags von dem Verkaufsautomaten (2) über den Bezahlserver (4) an das Endgerät (3),
Autorisierung des zu der Warenauswahl korrespondierenden Geldbetrags durch das Endgerät (3) an den Bezahlserver (4), und
Übertragen einer Bestätigungsnachricht von dem Bezahlserver (4) an den Verkaufsautomaten (3).

2. Verfahren nach Anspruch 1, **dadurch gekennzeichnet, dass**
der Identifikationscode ein QR-Code ist, und
das Einlesen des Identifikationscodes mit dem Endgerät (3) das Aufnehmen eines Bildes des QR-Codes mit einer Kamera (35) des Endgeräts (3) umfasst.

3. Verfahren nach einem der Ansprüche 1 oder 2, umfassend den zusätzlichen Schritt
Versenden einer Quittung von dem Verkaufsautomaten (2) an den Bezahlserver (4).

4. Verfahren nach einem der vorhergehenden Ansprüche, **dadurch gekennzeichnet, dass**
der Schritt der Warenauswahl an dem Verkaufsautomaten (2) die Warenauswahl bis zu dem reservierten Geldbetrag umfasst.

5. Verfahren nach einem der vorhergehenden Ansprüche, **dadurch gekennzeichnet, dass**
der Schritt des Bereitstellens eines von dem Endgerät (3) einlesbaren Identifikationscodes das dynamische Erzeugen und das Ausgeben des Identifikationscodes über ein Interface (14) umfasst.

6. Verfahren nach einem der vorhergehenden Ansprüche, **dadurch gekennzeichnet, dass**
der Schritt des Aktivierens des Verkaufsautomaten (2) durch den Bezahlserver (4) das Übermitteln des zu reservierenden Geldbetrags umfasst.

7. Verfahren nach einem der vorhergehenden Ansprüche, umfassend den zusätzlichen Schritt
Registrieren eines Nutzers des Endgeräts (3) an dem Bezahlserver (4).

8. System zum Bezahlen einer Ware an einem Verkaufsautomaten mit einem mobilen Endgerät, umfassend den Verkaufsautomaten, das Endgerät und einen Bezahlserver, wobei das System ausgeführt ist, das Verfahren zum Bezahlen einer Ware mit einem mobilen Endgerät nach einem der vorhergehenden Ansprüche durchzuführen.

9. Bezahlmodul (14) zur Verbindung mit einer Steuerungsschnittstelle (12) eines Verkaufsautomaten (2) zum Bezahlen mit einem mobilen Endgerät (3), wobei das Bezahlmodul (14) ausgeführt ist, folgende Schritte durchzuführen:
Empfangen eines Aktivierungsbefehl von einem Bezahlserver (4),
Signalisieren des Reservierens eines Geldbetrags über die Steuerungsschnittstelle (12),
Empfangen eines zu einer Warenauswahl korrespondierenden Geldbetrags über die Steuerungsschnittstelle (12),
Übertragen des zu der Warenauswahl korrespondierenden Geldbetrags an den Bezahlserver (4),
Empfangen einer Bestätigungsnachricht von dem Bezahlserver (4) als Abschluss des Bezahlvorgangs, und
Signalisieren des Abschlusses des Bezahlvorgangs über die Steuerungsschnittstelle (12).

10. Verkaufsautomat (2) zum Verkaufen einer Ware, wobei der Verkaufsautomat (2) eine Warenauswahleinheit (10) und eine Warenausgabeeinheit (11), die miteinander in Kommunikationsverbindung sind, aufweist, wobei der Verkaufsautomat (2) weiterhin einen von einem Endgerät (3) einlesbaren Identifikationscode aufweist,
**dadurch gekennzeichnet**, das
der Verkaufsautomat (2) mit einer Steuerungsschnittstelle (12) ausgeführt ist und ein Bezahlmodul (14) nach dem vorhergehenden Anspruch 9 umfasst, das mit der Steuerungsschnittstelle (12) verbunden ist.
Identifikationscode an dem Verkaufsautomaten angebracht oder durch diesen ausgebbar
